# EUROPÄISCHE PATENTANMELDUNG

(11) **EP 2 974 935 A1**
(43) Veröffentlichungstag der Anmeldung: **20.01.2016**
(21) Anmeldenummer: 14177074.3
(22) Anmeldetag: 15.07.2014
(51) Int. Cl.: B61D 15/12, B61J 3/12

(54) **Elektrisches Transportfahrzeug**

(71) Anmelder: Tony Brändle AG Wil, 9500 Wil (CH)
(72) Erfinder: Roethenmund, Fredy, 8360 Eschlikon (CH)
(74) Vertreter: Hepp Wenger Ryffel AG

(57) **Zusammenfassung**

Die vorliegende Erfindung betrifft eine Antriebseinheit (1), umfassend einen elektrisch betreibbaren Antrieb, einen Hauptkörper (2) mit einer Sitzgelegenheit (3) für mindestens eine, vorzugsweise genau eine Bedienungsperson, mindestens ein, vorzugsweise genau ein Rollelement (4), sowie eine Einheit (13) zur Befestigung der Antriebseinheit (1) an einer Transporteinheit (9). Die vorliegende Erfindung betrifft weiterhin ein Transportfahrzeug, umfassend eine derartige Antriebseinheit (1) und mindestens eine Transporteinheit (9), wobei die Transporteinheit (9) ein Element zur Aufnahme der an der Antriebseinheit (1) angeordneten Einheit (13) zur Befestigung der Antriebseinheit (1) an der Transporteinheit (9) aufweist. Die vorliegende Erfindung eignet sich bevorzugt für den Einsatz in einem Tunnel.

## Beschreibung

Die vorliegende Erfindung betrifft ein elektrisch betreibbares Transportfahrzeug, welches insbesondere zum Einsatz in einem Tunnel, aber auch zum Einsatz auf schwer erreichbaren Schienenabschnitten wie beispielsweise Böschungen, Waldabschnitten, Brücken beziehungsweise Viadukten, oder felsigen Berggebieten, geeignet ist.

Einsätze in einem Tunnel, sei es ein Rettungseinsatz zur Bergung von Personen oder ein Einsatz zur Wartung und/oder Reparatur, beinhalten aufgrund des eingeschränkten Platzes in einem Tunnel und dem darin eingeschränkten Luftaustausch mit der Umgebung besondere Anforderungen. In der Regel ist es nicht möglich, einen Einsatzort in einem Tunnel mit üblichen Rettungsfahrzeugen wie Feuerwehrfahrzeugen oder Krankenwagen zu erreichen. Analoge Probleme treten beim Einsatz auf schwer erreichbaren Schienenabschnitten wie beispielsweise Böschungen, Waldabschnitten, Brücken beziehungsweise Viadukten, oder felsigen Berggebieten auf.

Die Beförderung von Transporteinheiten in einem Tunnel mit Hilfe einer Lokomotive ist bekannt, aber mit dem Nachteil verbunden, dass für den Einsatz eine entsprechende Lokomotive bereitgestellt würden müsste. Gerade in einem Notfall ist es aber erwünscht, den Einsatz schnell und unabhängig von der Bereitstellung einer Lokomotive durchführen zu können.

Es bestand Bedarf für ein Transportfahrzeug, mit dessen Hilfe ein Einsatzort, insbesondere in einem Tunnel, aber auch auf anderen schwer erreichbaren Schienenabschnitten wie beispielsweise Böschungen, Waldabschnitten, Brücken beziehungsweise Viadukten, oder felsigen Berggebieten, gut erreicht und mit dessen Hilfe eine ausreichende Menge an Einsatzmaterial oder eine ausreichende Zahl an Personen befördert werden kann, wobei das Transportfahrzeug in einem Einsatzfahrzeug wie einem Feuerwehrfahrzeug gut beförderbar ist.

Die vorstehende Aufgabe wird durch eine Antriebseinheit und ein Transportfahrzeug gemäss den unabhängigen Ansprüchen gelöst.

Ein wesentlicher Aspekt der vorliegenden Erfindung ist eine Antriebseinheit, umfassend einen elektrisch betreibbaren Antrieb, einen Hauptkörper mit einer Sitzgelegenheit für mindestens eine, vorzugsweise genau eine Bedienungsperson, mindestens ein, vorzugsweise genau ein Rollelement, sowie eine Einheit zur Befestigung der Antriebseinheit an einer Transporteinheit.

Die erfindungsgemässe Antriebseinheit ist sehr kompakt und somit ohne grossen Platzbedarf in einem Einsatzfahrzeug wie einem Feuerwehrfahrzeug gut beförderbar.

Gemäss einer besonders bevorzugten Ausführungsform ist die erfindungsgemässe Antriebseinheit so ausgestaltet, dass sie auf einer Eisenbahnschiene eingesetzt werden kann, um eine oder mehrere Transporteinheiten zu ziehen.

Vorzugsweise weist die erfindungsgemässe Antriebseinheit somit Dimensionen auf, die deren Positionierung auf einer Eisenbahnschiene ermöglichen und Platz für eine Bedienerperson zur Verfügung stellen. Vorzugsweise weist die erfindungsgemässe Antriebseinheit eine Gesamthöhe von 60 bis 130 cm, vorzugsweise 70 bis 100 cm, und eine maximale Breite von 30 bis 100 cm, vorzugsweise 40 bis 60 cm auf. Die Gesamthöhe bemisst sich hierbei vom tiefsten Punkt der Antriebseinheit, in der Regel dem unteren Ende des Rollelements, bis zum höchsten Punkt der Antriebseinheit, in der Regel der Oberfläche der Sitzgelegenheit. Die maximale Breite der erfindungsgemässen Antriebseinheit wird an der Stelle bestimmt, an welcher die Antriebseinheit die grösste Breite aufweist. Vorzugsweise befindet sich diese Stelle im oberen Bereich der Antriebseinheit. Erfindungsgemäss bevorzugt hat die Antriebseinheit einen sich nach unten in Richtung Rollelement verjüngenden, trapezförmigen Querschnitt.

Gemäss einer alternativen Ausführungsform kann die erfindungsgemässe Antriebseinheit eine derartige Länge aufweisen, dass nicht nur eine, sondern zwei oder mehr Personen hintereinander auf der Antriebseinheit Platz finden können. Je nach Länge der Antriebseinheit sind in diesem Fall zusätzliche Rollelemente bereitzustellen.

Gemäss einer weiteren Ausführungsform kann die erfindungsgemässe Antriebseinheit auch derart ausgestaltet sein, dass sie mindestens zwei Rollelemente umfasst, die auf jeweils einer Schiene angeordnet werden können, so dass sich die Antriebseinheit über die gesamte Schienenbreite erstreckt.

Die erfindungsgemässe Antriebseinheit ist elektrisch betreibbar, um die auf der Antriebseinheit befindliche Person keinen Abgasen auszusetzen. Insbesondere in Tunneln wären aus Benzinmotoren oder Dieselmotoren austretende Abgase ein erhebliches Gesundheitsrisiko.

Elektrische Antriebe sind grundsätzlich bekannt. Vorzugsweise handelt es sich hierbei um einen Elektromotor.

Es ist grundsätzlich möglich, den elektrisch betreibbaren Antrieb über eine externe Stromquelle mit Energie zu versorgen, beispielsweise über eine bei einer derartigen Ausführungsform an der erfindungsgemässen Antriebseinheit vorgesehenen Schnittstelle, vorzugsweise eine Steckdose. Diese Variante ist aber auf Kurzstreckeneinsätze eingeschränkt, da bei dieser Ausführungsform die erfindungsgemässe Antriebseinheit mit einer externen Stromquelle verbunden sein muss und die Einsatzreichweite der erfindungsgemässen Antriebseinheit von der Länge der Verbindungsleitung (üblicherweise ein Stromkabel) mit der externen Stromquelle abhängig ist.

Die erfindungsgemässe Antriebseinheit umfasst daher vorzugsweise eine Einheit zur Erzeugung oder Speicherung von elektrischer Energie, um mit dieser elektrischen Energie eine elektrisch betreibbare Antriebseinheit anzutreiben.

Einheiten zur Erzeugung oder Speicherung von elektrischer Energie sind dem Fachmann bekannt. Erfindungsgemäss bevorzugt ist die Einheit zur Erzeugung oder Speicherung von elektrischer Energie ausgewählt aus der Gruppe bestehend aus einer Batterie und einem Akkumulator. Beispielhaft sei eine Lithium-Ionen-Batterie genannt.

Vorzugsweise umfasst die erfindungsgemässe Antriebseinheit eine Möglichkeit zum Aufladen der Einheit zur Speicherung von elektrischer Energie, sofern eine solche vorhanden ist. Beispielsweise kann an der erfindungsgemässen Antriebseinheit eine Schnittstelle wie eine Steckdose angeordnet sein, über welche die Antriebseinheit mit einer externen Stromquelle für einen Ladevorgang verbunden werden kann.

Alternativ kann die erfindungsgemässe Antriebseinheit aber auch andere bekannte Möglichkeiten zum Laden der Einheit zur Speicherung von elektrischer Energie umfassen. Beispielhaft sei auf die bei Hybrid-Fahrzeugen eingesetzte Technologie verwiesen, aus einem Bremsvorgang Energie zu gewinnen und zum Laden einer Einheit zur Speicherung von elektrischer Energie zu verwenden.

Der elektrisch betreibbare Antrieb und die Einheit zur Erzeugung oder Speicherung von elektrischer Energie sind gemäss dieser Ausführungsform der vorliegenden Erfindung derart miteinander verbunden, dass elektrische Energie von der Einheit zur Erzeugung oder Speicherung von elektrischer Energie zum elektrisch betreibbaren Antrieb fliessen kann. Vorzugsweise ist die Verbindung durch übliche elektrische Leitungen wie Stromkabel realisiert.

Die erfindungsgemässe Antriebseinheit weist einen Hauptkörper auf, an oder in welchem die verschiedenen Elemente der erfindungsgemässen Antriebseinheit angeordnet sind. Im einfachsten Fall kann es sich um ein Gestell, vorzugsweise ein offenes rohrförmiges Gestell handeln, welches Befestigungselemente zum Anordnen der verschiedenen Elemente der erfindungsgemässen Antriebseinheit aufweist.

Gemäss einer bevorzugten Ausführungsform der vorliegenden Erfindung ist das Gestell ein Gehäuse, in welchem die Einheit zur Erzeugung oder Speicherung von elektrischer Energie und die elektrische betreibbare Antriebseinheit angeordnet sind. Unter einem Gehäuse soll hierbei ein durch Deckflächen (Wände) teilweise oder vollständig verschlossener Körper verstanden werden.

Vorzugsweise befinden sich der elektrisch betreibbare Antrieb sowie die Einheit zur Erzeugung oder Speicherung von elektrischer Energie, sofern vorhanden, im Innern des Hauptkörpers und sind dort auf geeignete Weise fixiert.

Der Hauptkörper der erfindungsgemässen Antriebseinheit weist eine Sitzgelegenheit für mindestens eine, vorzugsweise genau eine Bedienungsperson auf. Vorzugsweise befindet sich diese Sitzgelegenheit auf der Deckfläche (d.h. Oberseite) des Hauptkörpers und erstreckt sich besonders bevorzugt über die gesamte Deckfläche des Hauptkörpers. Hinsichtlich der Ausgestaltung der Sitzgelegenheit gibt es keine Einschränkungen. Es kann jede üblicherweise bei Fahrzeugen verwendete Sitzgelegenheit herangezogen werden. Optional kann die Sitzgelegenheit mit einer Rückenlehne ausgestattet sein.

Am Hauptkörper kann weiterhin ein Trittbrett angeordnet sein, auf welches eine Bedienungsperson seine Füsse stellen kann. Trittbretter sind bekannt. Vorzugsweise befindet sich das Trittbrett in einer Position am Hauptkörper, welche ein bequemes Sitzen einer erwachsenen Person auf der erfindungsgemässen Antriebseinheit ermöglicht.

Die erfindungsgemässe Antriebseinheit umfasst mindestens ein, vorzugsweise genau ein Rollelement. Das Rollelement befindet sich am unteren Ende des Hauptkörpers und ist dort drehbar gelagert, beispielsweise auf einer Radwelle, welche ihrerseits am Hauptkörper befestigt ist.

Vorzugsweise ist das mindestens eine, vorzugsweise genau eine, Rollelement ein Rad. Gemäss der vorliegenden Erfindung soll unter Rädern übliches Rollmaterial verstanden werden, wie es bei Strassenfahrzeugen eingesetzt werden, beispielsweise handelsübliche Autoreifen. Gemäss der vorliegenden Erfindung soll unter einer Schienenrolle ein Rollmaterial verstanden werden, wie es üblicherweise bei Schienenfahrzeugen eingesetzt wird. Beispielhaft seien aus Stahl gefertigte Rollen mit einer der Schienenbreite entsprechenden zentralen Rinne genannt.

Mit Hilfe des Rollelements kann sich die erfindungsgemässe Antriebseinheit auf einer Eisenbahnschiene bewegen. Ist das Rollelement gemäss der bevorzugten Ausführungsform ein Rad, kann die erfindungsgemässe Antriebseinheit auch auf anderem Untergrund, beispielsweise einer Strasse betrieben werden.

Erfindungsgemäss bevorzugt ist das Rad ein Vollgummirad. Es können aber auch gasgefüllte Räder (wie beispielsweise herkömmliche Autoreifen) verwendet werden.

Erfindungsgemäss bevorzugt weist das Rollelement eine Breite auf, welche die Breite einer herkömmlich in Mitteleuropa verwendeten Eisenbahnschiene übersteigt, beispielsweise um 5 bis 50%, vorzugsweise um 10 bis 30%.

Die erfindungsgemässe Antriebseinheit kann zusätzlich mit einer Bremse ausgerüstet sein. Herkömmliche Bremssysteme für Fahrzeuge können hierbei zum Einsatz kommen. Erfindungsgemäss bevorzugt ist ein Totmannbremssystem. Unter einem Totmannbremssystem wird ein System verstanden, bei welchem die Bremswirkung eintritt, wenn ein Element zur Betätigung der Bremse, beispielsweise ein Bremshebel, gelöst wird, während zum Bewegen der Vorrichtung das entsprechende Element betätigt werden muss.

Wie vorstehend ausgeführt kann es bei einer alternativen Ausführungsform der vorliegenden Erfindung erforderlich sein, mehr als ein Rollelement unter dem Hauptkörper der erfindungsgemässen Antriebseinheit anzuordnen. Erfindungsgemäss bevorzugt ist jedoch die besonders kompakte Ausgestaltung der erfindungsgemässen Antriebseinheit mit nur einem Rollelement und einer Sitzgelegenheit für eine Person.

Am Hauptkörper der erfindungsgemässen Antriebseinheit können weitere zusätzliche Komponenten angeordnet sein, wie sie üblicherweise bei Fahrzeugen verwendet werden. Beispielsweise kann die Antriebseinheit vorzugsweise seitlich an ihrem Hauptkörper angeordnete Beleuchtungselemente aufweisen. Vorzugsweise sind zwei Beleuchtungselemente seitlich am Hauptkörper angeordnet. Erfindungsgemäss bevorzugt sind LED-Leuchten, die vorzugsweise über die Einheit zur Erzeugung oder Speicherung von elektrischer Energie mit elektrischer Energie versorgt werden können.

Weiterhin kann am Hauptkörper der erfindungsgemässen Antriebseinheit ein Element zur Bedienung des elektrisch betreibbaren Antriebs angeordnet sein. Erfindungsgemäss bevorzugt ist ein Hebel (beispielsweise ein Joystick), mit welchem der elektrisch betreibbare Antrieb vorzugsweise stufenlos reguliert werden kann. Dieses Bedienungselement ist vorzugsweise derart seitlich am Hauptkörper der erfindungsgemässen Antriebseinheit angeordnet, dass es von einer auf der erfindungsgemässen Antriebseinheit sitzenden Person problemlos mit der Hand bedient werden kann. Alternativ können auch Fusspedale zur Bedienung des elektrisch betreibbaren Antriebs bereitgestellt sein, vorzugsweise auf oder an einem Trittbrett.

Gemäss einer weiteren bevorzugten Ausführungsform kann die Antriebseinheit eine längliche Einheit, vorzugsweise eine Deichsel aufweisen, an welcher ein Element zur Bedienung des elektrisch betreibbaren Antriebs angeordnet sein kann. Die längliche Einheit, vorzugsweise die Deichsel, ist vorzugsweise lösbar an der Antriebseinheit angeordnet, beispielsweise über eine Steckverbindung. Alternativ kann die längliche Einheit, vorzugsweise die Deichsel, fest mit der erfindungsgemässen Einheit verbunden sein.
Die längliche Einheit, vorzugsweise die Deichsel, ist vorzugsweise auf einer gedachten vertikalen Mittelinie der Vorderfläche des Hauptkörpers der Antriebseinheit angeordnet, wobei sie vorzugsweise einen Winkel von 10 bis 90°, vorzugsweise 30 bis 60°, zur Vorderfläche des Hauptkörpers der Antriebseinheit aufweist. Befindet sich auf der erfindungsgemässen Antriebseinheit eine Person, erstreckt sich die längliche Einheit, vorzugsweise die Deichsel, vorzugsweise zwischen den Beinen dieser Person nach vorne beziehungsweise oben. Die längliche Einheit, vorzugsweise die Deichsel, erfüllt somit auch die Funktion einer Halteeinrichtung, an welcher sich eine auf der erfindungsgemässen Antriebseinheit befindliche Person während der Fahrt festhalten kann. Vorzugsweise sind zu diesem Zweck Halteelemente wie Griffe an der länglichen Einheit, vorzugsweise der Deichsel, angeordnet.

Die längliche Einheit, vorzugsweise die Deichsel, weist vorzugsweise eine derartige Länge auf, dass eine auf der erfindungsgemässen Antriebseinheit befindliche Person diese längliche Einheit, vorzugsweise die Deichsel, vor sich in Bauchbeziehungsweise Brusthöhe hat. Hierfür kann die längliche Einheit, vorzugsweise die Deichsel, bevorzugt eine Länge von 30 bis 70 cm aufweisen.

Gemäss einer bevorzugten Ausführungsform der vorliegenden Erfindung umfasst die längliche Einheit, vorzugsweise die Deichsel, ein Element zur Bedienung des elektrisch betreibbaren Antriebs. Es kann sich beispielsweise um einen an der länglichen Einheit, vorzugsweise Deichsel, angeordneten Hebel, beispielsweise einen Joystick, oder um einen Betätigungsknopf handeln. Das Element zur Bedienung des elektrisch betreibbaren Antriebs kann mit dem Antrieb über ein in der länglichen Einheit, vorzugsweise Deichsel, angeordnetes Kabel, oder kabellos (beispielsweise über eine Bluetooth-Verbindung) operativ verbunden sein.

Erfindungsgemäss bevorzugt kann die Antriebseinheit mit Hilfe des elektrisch betreibbaren Antriebs vorwärts und rückwärts bewegt werden.

Analog kann am Hauptkörper der erfindungsgemässen Antriebseinheit ein Element zur Bedienung eines gegebenenfalls vorhandenen Bremssystems angeordnet sein. Beispielsweise kann es sich bei diesem Element um einen herkömmlichen Bremshebel handeln. Dieses Bedienungselement ist vorzugsweise derart seitlich am Hauptkörper der erfindungsgemässen Antriebseinheit angeordnet, dass es von einer auf der erfindungsgemässen Antriebseinheit sitzenden Person problemlos mit der Hand bedient werden kann. Alternativ können auch Fusspedale zur Bedienung eines gegebenenfalls vorhandenen Bremssystems bereitgestellt sein, vorzugsweise auf oder an einem Trittbrett.

Gemäss einer besonders bevorzugten Ausführungsform der vorliegenden Erfindung ist die Antriebseinheit derart ausgestaltet, dass das Gewicht einer auf der Antriebseinheit Platz nehmenden Person direkt auf das Rollelement übertragen wird, d.h. es findet keinerlei Abfederung oder anderweitige Gewichtsverteilung statt, wenn sich mindestens eine Bedienungsperson auf der Sitzgelegenheit befindet. Dadurch wird eine Last auf das Rollelement gebracht und dessen Haftung auf einer Eisenbahnschiene verbessert. Diese bevorzugte Ausführungsform kann beispielsweise mit Hilfe einer direkten Verbindung der Sitzgelegenheit mit einer Radwelle, auf welcher das Rollelement drehbar angeordnet ist, erreicht werden, beispielsweise mit Hilfe von zwei Stangen, die von der Sitzgelegenheit direkt zu Positionen auf der Radwelle links und rechts vom Rollelement führen.
Die erfindungsgemässe Antriebseinheit ist vorzugsweise so konzipiert, dass sie eine Reichweite von bis zu 30 km, vorzugsweise 15-20 km, hat und eine Geschwindigkeit von 2 bis 40 km/h, vorzugsweise 5-35 km/h und besonders bevorzugt 5 bis 20 km/h erreichen kann. Erfindungsgemäss bevorzugt weist die erfindungsgemässe Antriebseinheit ein Gewicht von 20 bis 50 kg, vorzugsweise 30 bis 45 kg auf.

Die erfindungsgemässe Antriebseinheit dient vorzugsweise zur Bewegung von Transporteinheiten, vorzugsweise in einem Tunnel, oder auf schwer erreichbaren Schienenabschnitten wie beispielsweise Böschungen, Waldabschnitten, Brücken beziehungsweise Viadukten, oder felsigen Berggebieten. Es kann sich hierbei um jegliche Tunnel, vorzugsweise um Eisenbahntunnel oder U-Bahntunnel, handeln.

Die erfindungsgemässe Antriebseinheit weist daher eine Einheit zur Befestigung der Antriebseinheit an einer Transporteinheit auf. Grundsätzlich sind alle herkömmlich bekannten und eingesetzten Verbindungselemente zwischen zwei Fahrzeugeinheiten erfindungsgemäss verwendbar. Beispielhaft sei eine Anhängerkupplung genannt. Erfindungsgemäss bevorzugt ist am Hauptkörper der erfindungsgemässen Antriebseinheit, auf der zur Fahrtrichtung abgewandten Seite, ein nach unten, d.h. in Richtung Rollelement der Antriebseinheit, für eine kuppelnde Verbindung zugängliches rohrförmiges Element angeordnet, welcher in eine dazu passende Öffnung eines an einer Transporteinheit angeordneten Elements eingeführt werden kann (Steckverbindung). Das rohrförmige Element weist dabei derartige Dimensionen (Länge und Dicke) auf, dass unter Betriebsbedingungen eine sichere Verbindung zwischen Antriebseinheit und Transporteinheit gewährleistet ist.

Die vorliegende Erfindung betrifft weiterhin eine Transporteinheit, umfassend vier Rollelemente, vorzugsweise Schienenrollen, eine Ladefläche, und ein Element zur Aufnahme der an einer Antriebseinheit angeordneten Einheit zur Befestigung der Antriebseinheit an der Transporteinheit, wobei die mindestens eine Transporteinheit zusammenklappbar ist, vorzugsweise mittels eines im mittleren Abschnitt der Transporteinheit angeordneten Scharniers.

Die vorliegende Erfindung betrifft somit weiterhin ein Transportfahrzeug, umfassend eine Antriebseinheit wie vorstehend beschrieben und mindestens eine Transporteinheit, wobei die Transporteinheit ein Element zur Aufnahme der an der Antriebseinheit angeordneten Einheit zur Befestigung der Antriebseinheit an der Transporteinheit aufweist.

Erfindungsgemäss bevorzugt ist an der Transporteinheit ein Element angebracht, welches eine Öffnung, vorzugsweise eine runde Öffnung aufweist, die für ein an der Antriebseinheit angeordnetes rohrförmiges Element zugänglich und selbiges aufnehmen kann. Beispielhaft kann es sich bei diesem Element um eine Platte handeln, welche parallel zur Ladefläche der Transporteinheit angeordnet ist, an ihrem einen Ende eine entsprechende Öffnung aufweist und an ihrem anderen Ende mit der Transporteinheit verbunden ist. Es ist aber auch möglich, in der Ladefläche der Transporteinheit eine entsprechende Öffnung vorzusehen.

Das Element zur Aufnahme der an der Antriebseinheit angeordneten Einheit zur Befestigung der Antriebseinheit an der Transporteinheit ist vorzugsweise an einer Ecke der Transporteinheit dergestalt angeordnet, dass im verbundenen Zustand sowohl die Rollelemente der Transporteinheit als auch das Rollelement der Antriebseinheit auf einer Eisenbahnschiene bewegt werden können. Besonders bevorzugt weist die Transporteinheit an mehreren Ecken, besonders bevorzugt an sämtlichen Ecken, jeweils ein Element zur Aufnahme der an der Antriebseinheit angeordneten Einheit zur Befestigung der Antriebseinheit an der Transporteinheit auf. Dadurch wird ermöglicht, die Antriebseinheit mit jeder gewünschten Ecke der Transporteinheit zu verbinden. Es ist weiterhin möglich, beispielsweise zwei Antriebseinheiten mit den in Fahrtrichtung vorderen Ecken der Transporteinheit zu verbinden.

Erfindungsgemäss kann jede herkömmliche Transporteinheit verwendet werden, mit welcher Material oder Personen befördert werden können und welche mit der erfindungsgemässen Antriebseinheit verbunden werden kann.

Eine erfindungsgemäss bevorzugte Transporteinheit weist vier Rollelemente, vorzugsweise Schienenrollen, und eine Ladefläche auf. Vorzugsweise sind die Rollelemente an den Ecken oder in der Nähe der Ecken der Ladefläche unterhalb der Ladefläche angeordnet.

Die Dimensionen der Transporteinheit können je nach Bedarf variiert werden. Beispielhaft kann die Ladefläche einer erfindungsgemäss verwendbaren Transporteinheit eine Länge von 1,5 bis 5 m, vorzugsweise 2 bis 4 m, und eine Breite von 1.5 bis 3 m, vorzugsweise 1,5 bis 2 m aufweisen. Zu breite Transporteinheiten können in Tunnels aufgrund des dort beschränkten Platzangebots nicht verwendet werden.

Gemäss einer bevorzugten Ausführungsform der vorliegenden Erfindung ist die Transporteinheit zusammenklappbar, vorzugsweise mittels eines im mittleren Abschnitt der Transporteinheit angeordneten Scharniers. Dadurch kann die Transporteinheit besser in einem Einsatzfahrzeug wie einem Feuerwehrfahrzeug verstaut und befördert werden.

Gemäss der vorliegenden Erfindung ist es auch möglich, mehrere Transporteinheiten, beispielsweise 2 bis 4 Transporteinheiten, zu einem Transportzug miteinander zu verbinden und mit mindestens einer erfindungsgemässen Antriebseinheit zu bewegen. Die Transporteinheiten können hierbei untereinander auf analoge Weise verbunden werden, wie die erfindungsgemässe Antriebseinheit wie vorstehend beschrieben mit einer Transporteinheit verbunden werden kann, d.h. mit herkömmlich bekannten und eingesetzten Verbindungselementen zwischen zwei Fahrzeugeinheiten. Beispielhaft sei eine Anhängerkupplung genannt. Zur Verbindung der Transporteinheiten untereinander können die gleichen (vorzugsweise an den Ecken angeordneten) Verbindungselemente herangezogen werden, die auch bei der Verbindung der Antriebseinheit mit einer Transporteinheit verwendet werden. Es können für die Verbindung der Transporteinheiten untereinander aber auch separate Verbindungselemente verwendet werden, beispielsweise mittig an einem Ende der Transporteinheit angeordnete Anhängerkupplungen.

Die mindestens eine Transporteinheit kann mit einer Bremse ausgerüstet sein. Herkömmliche Bremssysteme für Fahrzeuge können hierbei zum Einsatz kommen. Erfindungsgemäss bevorzugt ist ein Totmannbremssystem. Es können sämtliche Rollelemente oder nur bestimmte Rollelemente, beispielsweise nur ein Rollelement oder die beiden vorderen Rollelemente, der Transporteinheit mit einer Bremse ausgestattet sein. Erfindungsgemäss bevorzugt ist das Bremssystem der Transporteinheit derart ausgestaltet, dass es von einer auf der erfindungsgemässen Antriebseinheit befindlichen Person während der Fahrt bedient werden kann. Dies kann beispielsweise durch eine Verbindungsleitung realisiert werden, welche das Bremssystem der Transporteinheit mit einem Bedienungselement verbindet, das von einer auf der erfindungsgemässen Antriebseinheit befindlichen Person bedient werden kann.

Auf der Ladefläche der Transporteinheit können nach Bedarf Elemente zur Befestigung von Transportgütern oder Sitzgelegenheiten für Personen (beispielsweise Bänke) bereitgestellt werden. Hierzu weist die Ladefläche erfindungsgemäss bevorzugt entsprechende Befestigungselemente auf, beispielsweise Haltegurte, Befestigungsringe oder Vertiefungen zur Aufnahme von Tischbeinen oder Stuhlbeinen. Es können auch an den Seiten der Ladefläche Begrenzungen wie Zäune oder Wände bereitgestellt sein, um ein Abrutschen einer Ladung zu verhindern.

Die erfindungsgemässe Antriebseinheit eignet sich vorzugsweise zum Bewegen mindestens einer Transporteinheit, unter Ausbildung eines erfindungsgemässen Transportfahrzeugs.

Das erfindungsgemässe Transportfahrzeug eignet sich besonders für einen Einsatz, vorzugsweise einen Rettungseinsatz oder Reparatureinsatz, in einem Tunnel, vorzugsweise einem Eisenbahntunnel oder U-Bahn-Tunnel, aber auch zum Einsatz auf schwer erreichbaren Schienenabschnitten wie beispielsweise Böschungen, Waldabschnitten, Brücken beziehungsweise Viadukten, oder felsigen Berggebieten.

Die vorliegende Erfindung wird nachstehend anhand von bevorzugten Ausführungsformen und nicht einschränkenden Zeichnungen näher erläutert. Es zeigen:
- Fig. 1: eine Vorderansicht einer Ausführungsform der erfindungsgemässen Antriebseinheit
- Fig. 2: eine Seitenansicht einer Ausführungsform der erfindungsgemässen Transportvorrichtung
- Fig. 3: eine Seitenansicht einer Ausführungsform der erfindungsgemässen Transportvorrichtung, welche mit Komponenten für einen Rettungseinsatz beladen ist
- Fig. 4: eine Seitenansicht einer Ausführungsform der erfindungsgemässen Transportvorrichtung, welche zur Personenbeförderung bereitgestellt ist
- Fig. 5: eine Seitenansicht einer Ausführungsform der erfindungsgemässen Transporteinheit in zusammengeklapptem Zustand
- Fig. 6: eine Seitenansicht einer weiteren Ausführungsform der erfindungsgemässen Transportvorrichtung

In den Figuren bezeichnen gleiche Bezugszeichen die gleichen Komponenten.

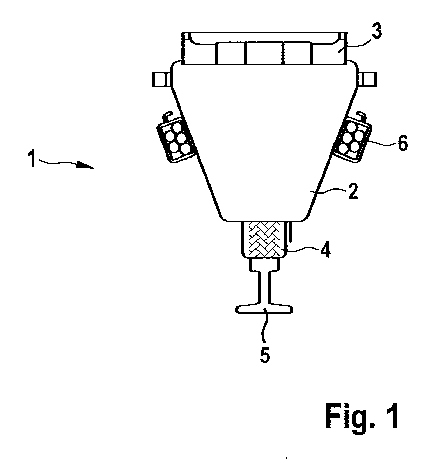

In Fig. 1 ist eine Vorderansicht einer Ausführungsform der erfindungsgemässen Antriebseinheit 1 gezeigt. Die Antriebseinheit 1 umfasst einen Hauptkörper 2 in Form eines geschlossenen Gehäuses. In dem Hauptkörper 2 sind (nicht gezeigt) eine Batterie zur Stromversorgung und ein Elektromotor angeordnet. Auf dem Hauptkörper 2 befindet sich eine Sitzgelegenheit 3 für eine Person. In der gezeigten Ausführungsform handelt es sich bei der Sitzgelegenheit 3 um ein Sitzpolster. Unter dem Hauptkörper 2 ist ein Rollmaterial 4, hier ein Vollgummirad, angeordnet. Das Rollmaterial 4 ist mit dem Hauptkörper 2 über eine (nicht gezeigte) Radwelle drehbar verbunden. Das Rollmaterial 4, hier ein Vollgummirad, weist eine Breite auf, welche die Breite einer herkömmlich in Mitteleuropa eingesetzten Eisenbahnschiene 5 leicht (um etwa 30%) übersteigt. Seitlich an dem Hauptkörper 2 sind Beleuchtungselemente 6 (hier LED-Leuchten) angebracht.

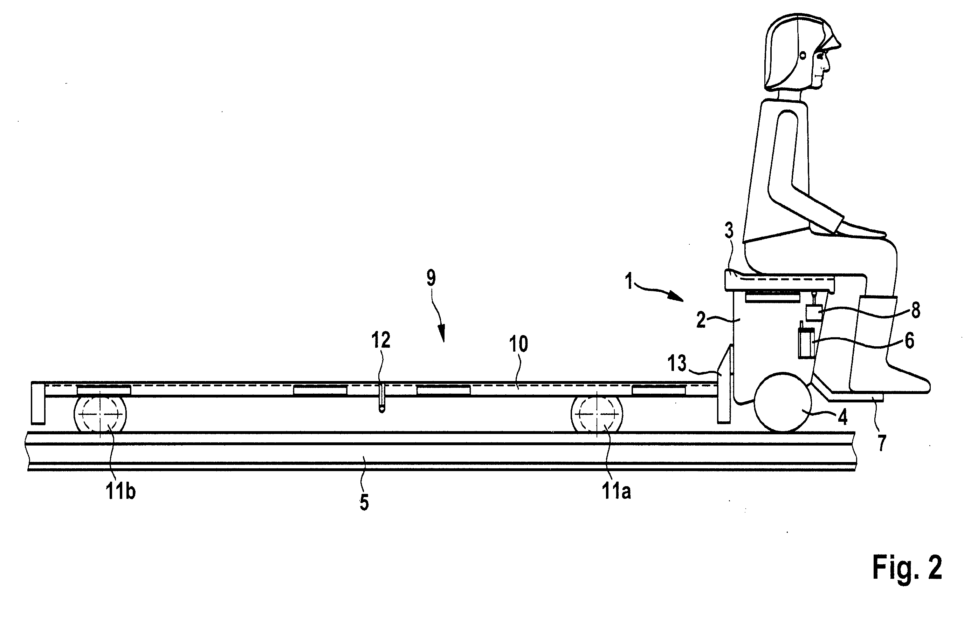

In Fig. 2 ist eine Seitenansicht einer Ausführungsform der erfindungsgemässen Transportvorrichtung gezeigt. Die Antriebseinheit 1 ist über eine Einheit 13 zur Befestigung der Antriebseinheit 1 an einer Transporteinheit 9, hier ein rohrförmiges Kupplungselement, welche in eine in der Transporteinheit 9 vorgesehene Öffnung eingesteckt ist, verbunden. Die in Fig. 2 gezeigte Ausführungsform der Antriebseinheit 1 weist zusätzlich ein Trittbrett 7 sowie ein Bedienungselement 8, hier ein Hebel, zur Bedienung eines im Hauptkörper 2 angeordneten (nicht gezeigten) Elektromotors auf. Die Transporteinheit 9 umfasst eine Ladefläche 10 sowie Rollmaterial 11a und 11b, hier Schienenrollen, unterhalb der Ladefläche auf. Bei der Ausführungsform gemäss Fig. 2 sind vier Schienenrollen 11a, 11b vorgesehen, die in der Nähe der Ecken der Ladefläche 10 unter der Ladefläche 10 angebracht sind. Bei der Ausführungsform gemäss Fig. 2 sind die beiden in Fahrtrichtung vorne angeordneten Schienenrollen 11a mit einem (nicht gezeigten) Totmannbremssystem versehen, welches von der auf der Antriebseinheit 1 befindlichen Bedienungsperson betätigt werden kann. In der Ladefläche 10 ist mittig ein Scharnier 12 angeordnet, welches ein Zusammenklappen der Transporteinheit 9 ermöglicht.

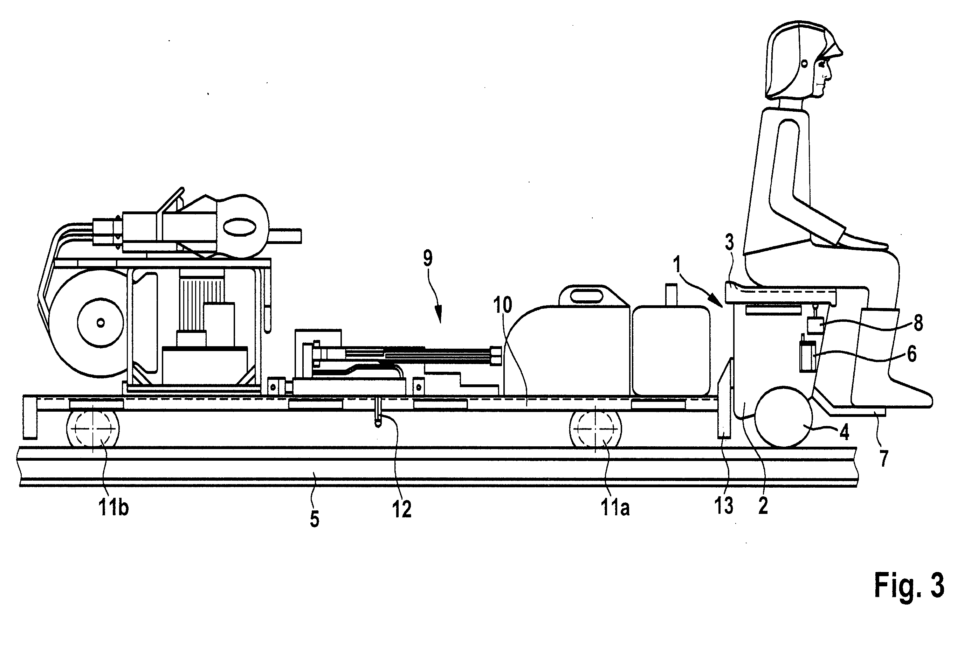

In Fig. 3 ist eine Seitenansicht einer Ausführungsform der erfindungsgemässen Transportvorrichtung gezeigt, welche mit Komponenten für einen Rettungseinsatz beladen ist. Die Komponenten können auf der Ladefläche 10 mit Hilfe von (nicht gezeigten) Befestigungselementen wie Gurten und/oder Befestigungsringen fixiert werden.

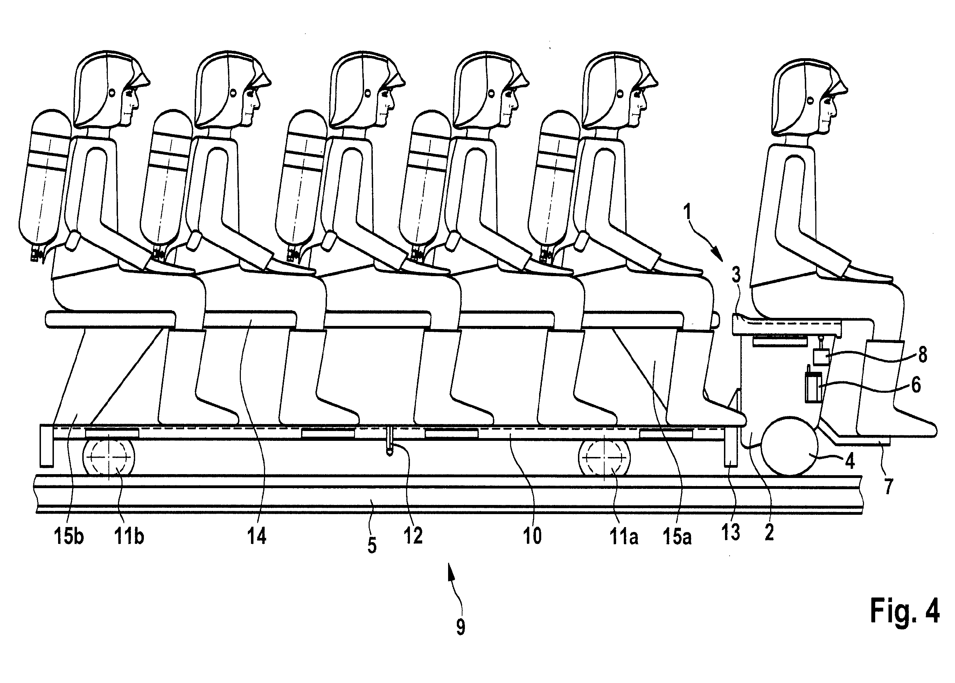

In Fig. 4 ist eine Seitenansicht einer Ausführungsform der erfindungsgemässen Transportvorrichtung gezeigt, welche zur Personenbeförderung bereitgestellt ist. Zu diesem Zweck ist auf der Ladefläche 10 eine Sitzbank 14 angeordnet, welche über Tischbeine 15a, 15b auf der Ladefläche 10 in (nicht gezeigten) Vertiefungen fixiert ist. Es können unterschiedliche Ausgestaltungen von Sitzgelegenheiten eingesetzt werden.

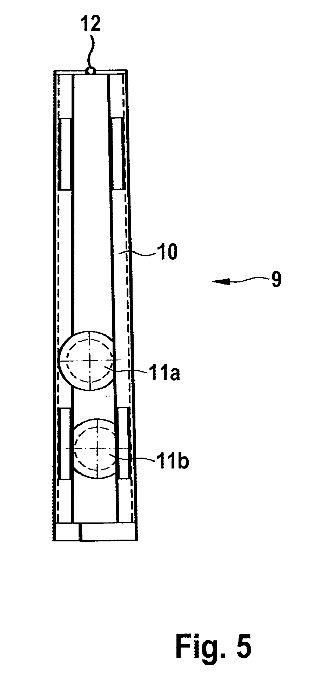

In Fig. 5 ist eine Seitenansicht einer Ausführungsform der erfindungsgemässen Transporteinheit 9 in zusammengeklapptem Zustand gezeigt. Die Transporteinheit ist entlang des Scharniers 12 zusammengeklappt, so dass die beiden Hälften der Ladefläche 10 aufeinander liegen und durch die Rollelemente 11a, 11b getrennt sind.

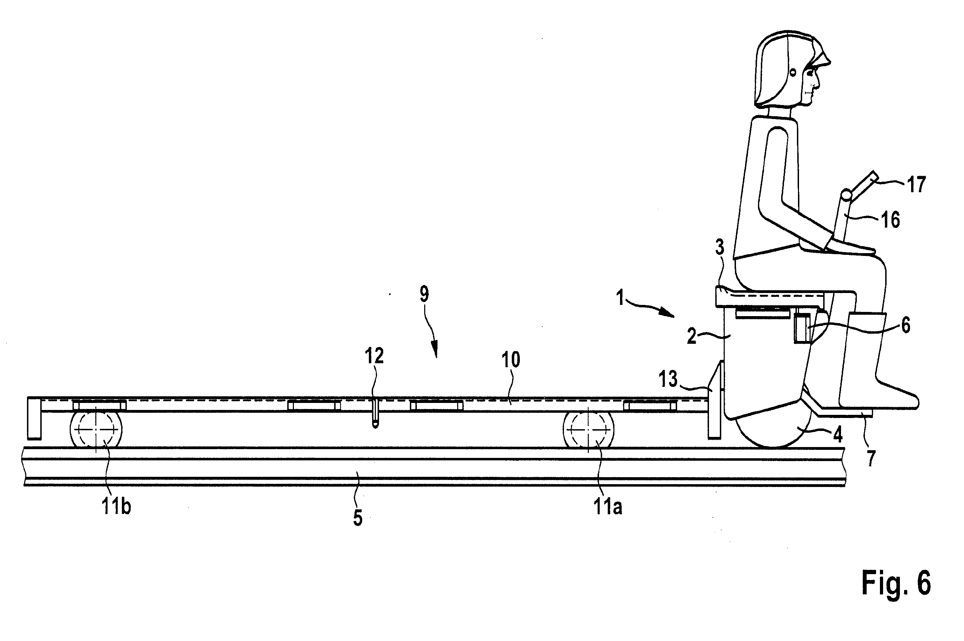

In Fig. 6 ist eine eine Seitenansicht einer weiteren Ausführungsform der erfindungsgemässen Transportvorrichtung gezeigt. Von der in Fig. 2 gezeigten Ausführungsform unterscheidet sich die Ausführungsform gemäss Fig. 6 dahingehend, dass statt des Bedienungselements 8 ein Bedienungselement 17 an einer Deichsel 16 angeordnet ist. Die Deichsel 16 ist an der Vorderfläche des Hauptkörpers 2 angeordnet, vorzugsweise über eine lösbare Steckverbindung, und erstreckt sich zwischen den Beinen einer auf der Einheit 1 sitzenden Person nach vorne beziehungsweise oben. Am freien Ende der Deichsel 16 ist das Bedienungselement 17 angeordnet. In Fig. 6 ist das Bedienungselement 17 als Schalthebel ausgestaltet. Andere Varianten wie Druckknöpfe sind ebenfalls denkbar. Das Bedienungselement 17 kann über ein in der Deichsel 16 geführtes Kabel oder kabellos (beispielsweise über eine Bluetooth-Verbindung) mit dem (nicht gezeigten) Antrieb wie Elektromotor operative verbunden sein.

## Patentansprüche

1. Antriebseinheit (1), umfassend einen elektrisch betreibbaren Antrieb, vorzugsweise einen Elektromotor, einen Hauptkörper (2) mit einer Sitzgelegenheit (3) für mindestens eine, vorzugsweise genau eine Bedienungsperson, mindestens ein, vorzugsweise genau ein Rollelement (4), sowie eine Einheit (13) zur Befestigung der Antriebseinheit (1) an einer Transporteinheit (9).

2. Antriebseinheit nach Anspruch 1, **dadurch gekennzeichnet, dass** die Antriebseinheit (1) eine Einheit zur Erzeugung oder Speicherung von elektrischer Energie umfasst, welche vorzugsweise ausgewählt ist aus der Gruppe bestehend aus einer Batterie und einem Akkumulator.

3. Antriebseinheit nach Anspruch 1 oder 2, **dadurch gekennzeichnet, dass** die Antriebseinheit eine längliche Einheit (16), vorzugsweise Deichsel, umfasst, an welcher ein Bedienelement (17) zur Bedienung des elektrisch betreibbaren Antriebs angeordnet ist.

4. Antriebseinheit nach einem der Ansprüche 1 bis 3, **dadurch gekennzeichnet, dass** der Hauptkörper (2) ein Gehäuse ist, in welchem die Einheit zur Erzeugung oder Speicherung von elektrischer Energie und der elektrisch betreibbare Antrieb angeordnet sind.

5. Antriebseinheit nach einem der Ansprüche 1 bis 4, **dadurch gekennzeichnet, dass** die Sitzgelegenheit (3) für mindestens eine, vorzugsweise genau eine Bedienungsperson auf der Deckfläche des Hauptkörpers (2) angeordnet ist.

6. Antriebseinheit nach einem der Ansprüche 1 bis 5, **dadurch gekennzeichnet, dass** das mindestens eine, vorzugsweise genau eine Rollelement (4) ein Rad ist.

7. Antriebseinheit nach einem der Ansprüche 1 bis 6, **dadurch gekennzeichnet, dass** die Antriebseinheit (1) derart ausgestaltet ist, dass das Gewicht einer auf der Antriebseinheit (1) Platz nehmenden Person direkt auf das Rollelement (4) übertragen wird.

8. Transporteinheit (9), umfassend vier Rollelemente (11a, 11b), vorzugsweise Schienenrollen, eine Ladefläche (10), und ein Element zur Aufnahme der an einer Antriebseinheit (1) angeordneten Einheit (13) zur Befestigung der Antriebseinheit (1) an der Transporteinheit (9), wobei die mindestens eine Transporteinheit (9) zusammenklappbar ist, vorzugsweise mittels eines im mittleren Abschnitt der Transporteinheit (9) angeordneten Scharniers (12).

9. Transportfahrzeug, umfassend eine Antriebseinheit (1) nach einem der Ansprüche 1 bis 8 und mindestens eine Transporteinheit (9), wobei die Transporteinheit (9) ein Element zur Aufnahme der an der Antriebseinheit (1) angeordneten Einheit (13) zur Befestigung der Antriebseinheit (1) an der Transporteinheit (9) aufweist.

10. Transportfahrzeug nach Anspruch 9, **dadurch gekennzeichnet, dass** die mindestens eine Transporteinheit (9) vier Rollelemente (11a, 11b), vorzugsweise Schienenrollen, und eine Ladefläche (10) aufweist.

11. Transportfahrzeug nach Anspruch 9 oder 10, **dadurch gekennzeichnet, dass** die mindestens eine Transporteinheit (9) zusammenklappbar ist, vorzugsweise mittels eines im mittleren Abschnitt der Transporteinheit (9) angeordneten Scharniers (12).

12. Transportfahrzeug nach einem der Ansprüche 9 bis 11, **dadurch gekennzeichnet, dass** mindestens ein Rollelement (11a, 11b), vorzugsweise zwei Rollelemente, mit einem Bremssystem ausgestattet sind.

13. Transportfahrzeug nach Anspruch 12, **dadurch gekennzeichnet, dass** es sich bei dem Bremssystem um eine Totmannbremse handelt.

14. Verwendung einer Antriebseinheit (1) gemäss einem der Ansprüche 1 bis 8 zum Bewegen mindestens einer Transporteinheit (9).

15. Verwendung eines Transportfahrzeugs gemäss einem der Ansprüche 9 bis 13 für einen Einsatz, vorzugsweise einen Rettungseinsatz oder Reparatureinsatz, in einem Tunnel, oder auf schwer erreichbaren Schienenabschnitten wie beispielsweise Böschungen, Waldabschnitten, Brücken beziehungsweise Viadukten, oder felsigen Berggebieten.
